(19) **Europäisches Patentamt / European Patent Office / Office européen des brevets**

(11) **EP 4 511 421 B1**

(12) **FASCICULE DE BREVET EUROPEEN**

(45) Date de publication et mention de la délivrance du brevet:
**03.06.2026 Bulletin 2026/23**

(21) Numéro de dépôt: **23719017.8**

(22) Date de dépôt: **11.04.2023**

(51) Classification Internationale des Brevets (IPC):
**C08L 7/00** (2006.01)      **C08L 9/06** (2006.01)
**C08L 53/02** (2006.01)      **B60C 1/00** (2006.01)

(52) Classification Coopérative des Brevets (CPC):
(C-Sets disponibles)
**C08L 9/06; B60C 1/00; C08F 297/044; C08L 7/00; C08L 53/02**      (Cont.)

(86) Numéro de dépôt international:
**PCT/EP2023/059437**

(87) Numéro de publication internationale:
**WO 2023/202915 (26.10.2023 Gazette 2023/43)**

(54) **MATRICE ÉLASTOMÈRE COMPRENANT UN ÉLASTOMÈRE THERMOPLASTIQUE**

ELASTOMERMATRIX ENTHALTEND EIN THERMOPLASTISCHES ELASTOMER

ELASTOMERIC MATRIX COMPRISING A THERMOPLASTIC ELASTOMER

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.04.2022 FR 2203718**

(43) Date de publication de la demande:
**26.02.2025 Bulletin 2025/09**

(73) Titulaire: **COMPAGNIE GENERALE DES ETABLISSEMENTS MICHELIN**
**63000 Clermont-Ferrand (FR)**

(72) Inventeurs:
• **DIRE, Charlotte**
  **63040 CLERMONT-FERRAND CEDEX 09 (FR)**
• **HABHAB, Karima**
  **63040 CLERMONT-FERRAND CEDEX 09 (FR)**
• **TOUSTOU, Mathilde**
  **63040 CLERMONT-FERRAND CEDEX 09 (FR)**
• **COUE, Jean**
  **63040 CLERMONT-FERRAND CEDEX 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2015/091922      WO-A1-2015/091933**
**WO-A1-2016/202970**

(52) Classification Coopérative des Brevets (CPC):
(Cont.)

C-Sets
**C08L 53/02, C08L 25/16;**
**C08L 53/02, C08L 53/02, C08L 25/16**

## Description

### Domaine technique de l'invention

La présente invention concerne une matrice élastomère comprenant un élastomère thermoplastique tribloc ayant un bloc élastomère diénique et deux blocs thermoplastiques comprenant des unités α-méthylstyrène.

### Art antérieur

Dans le domaine des pneumatiques pour véhicules automobiles, la Demanderesse a par le passé développé des compositions de caoutchouc comprenant un élastomère thermoplastique. Ces pneumatiques présentent un très bon compromis de performances en adhérence et en résistance au roulement.

Les élastomères thermoplastiques (TPE) sont des élastomères qui sont d'un grand intérêt dans de nombreux domaines du fait de leurs propriétés combinées liées d'une part au bloc élastomère et d'autre part au bloc rigide thermoplastique. Par ailleurs, l'association des blocs rigides thermoplastiques entre eux confère au matériau un comportement d'un élastomère réticulé. En effet, les nodules rigides, formés par des zones d'associations de blocs thermoplastiques entre eux, jouent le rôle de nœud de réticulation. Le matériau est donc rigide et ne s'écoule pas. En revanche, lorsque la température est élevée au-dessus de la température de transition vitreuse ou de la température de fusion des blocs rigides, le polymère va pouvoir s'écouler, permettant la mise en forme du matériau. Ce dernier retrouve sa rigidité lorsque la température revient au niveau de la température de fonctionnement, inférieure à la Tg des blocs thermoplastiques. Cette particularité des TPE implique un potentiel d'application très large.

Parmi ces élastomères thermoplastiques on trouve les copolymères à blocs poly(α-méthylstyrène) qui ont l'avantage de présenter une haute tenue thermique car les blocs rigides sont des blocs poly(α-méthylstyrène) présentant une Tg élevée d'environ 150-170°C. Ces élastomères thermoplastiques sont largement décrits dans l'état de l'art, dans la littérature académique ou encore dans la documentation brevet. Parmi ces élastomères thermoplastiques, certains sont décrits comme possédant des blocs thermoplastiques copolymères d'α-méthylstyrène et d'un autre monomère comme le styrène, tel que dans WO2007112232A2 par exemple. D'autres documents décrivent des TPE dont les blocs thermoplastiques sont exclusivement constitués d'unités issues d' α-méthylstyrène, tel que par exemple FR2243214.

Des compositions polymériques à base de copolymères à blocs poly(α-méthylstyrène) visant à atteindre des objectifs divers ont également été décrites. Ainsi, EP1498455A1 décrit une composition polymérique comprenant un élastomère thermoplastique à blocs dont un bloc est composé principalement d'α-méthylstyrène et un bloc est composé d'un diène conjugué, ainsi qu'une résine acrylique et un plastifiant. De son côté, EP2955203A1 décrit une composition polymérique comprenant un élastomère thermoplastique à blocs dont un bloc est composé principalement d'α-méthylstyrène et un bloc est composé d'un diène conjugué, ainsi qu'un autre élastomère thermoplastique associé à un polypropylène et un polyéthylène. Également WO2020136194 décrit une composition polymérique comprenant un élastomère thermoplastique à blocs dont un bloc est composé principalement d'α-méthylstyrène et un bloc est composé d'un diène conjugué, ainsi qu'un plastifiant choisi parmi les oligobutadiènes.

Dans cet art antérieur, les propriétés physiques des compositions polymériques sont largement mises en avant, notamment les propriétés mécaniques telles que la résistance aux rayures, la résistance à l'abrasion, la flexibilité, la rigidité, la résistance mécanique. Par ailleurs, les documents EP1498455A1, paragraphe [0053], EP2955203A1, paragraphe [0043], FR2243214, page 3 ligne 17, préviennent le lecteur que lors de la synthèse des copolymères à blocs poly(α-méthylstyrène), il convient de bien choisir les conditions opératoires de façon à minimiser la désactivation des chaînes poly(α-méthylstyrène) lors de leur étape de synthèse, ce qui permet de minimiser la quantité de poly(α-méthylstyrène) libre dans le produit final. En effet, le polymère poly(α-méthylstyrène) est décrit comme une impureté pouvant détériorer les propriétés mécaniques du produit final.

Un objectif constant des manufacturiers de pneumatiques est la diminution de la résistance au roulement des pneumatiques. L'amélioration de la résistance au roulement suppose de baisser les pertes hystérétiques. Toutefois, la diminution de l'hystérèse (donc l'amélioration des propriétés hystérétiques) n'est pas un objectif réservé au domaine du pneumatique et peut avoir de nombreux avantages dans d'autres domaines utilisant des matériaux hystérétiques.

Un objectif de l'invention est donc de diminuer l'hystérèse d'un matériau à base d'un élastomère thermoplastique à blocs thermoplastiques comprenant des unités α-méthylstyrène.

L'objectif de diminution de l'hystérèse (d'amélioration des propriétés hystérétiques) est atteint en associant dans certaines proportions un polymère thermoplastique comprenant des unités α-méthylstyrène à un élastomère thermoplastique tribloc comprenant un bloc élastomère diénique et deux blocs thermoplastiques terminaux comprenant des unités α-méthylstyrène.

En effet, les Inventeurs ont su mettre en évidence contre toute attente qu'à iso taux de chaînes thermoplastiques à base α-méthylstyrène total, un taux de plus 10% en poids d'un polymère thermoplastique à base d'α-méthylstyrène dans une matrice élastomère à base d'élastomères thermoplastiques à blocs dont les blocs thermoplastiques sont à base d'α-méthylstyrène, permet de diminuer de manière significative l'hystérèse, et donc d'améliorer les propriétés hystérétiques de la matrice élastomère, par rapport à une matrice élastomère comprenant un faible taux de ce polymère thermoplastique.

Ainsi, l'invention a pour objet une matrice élastomère comprenant un premier polymère qui est un élastomère thermoplastique à blocs ayant un bloc élastomère diénique et deux blocs thermoplastiques comprenant des unités $\alpha$-méthylstyrène, de 2 à 20% en poids par rapport au poids total de la matrice élastomère d'un deuxième polymère qui est un élastomère thermoplastique à blocs ayant un bloc élastomère diénique et un bloc thermoplastique comprenant des unités $\alpha$-méthylstyrène et plus de 10% en poids d'un troisième polymère qui est un polymère thermoplastique comprenant des unités $\alpha$-méthylstyrène.

**Exposé de l'invention**

L'invention, décrite plus en détails ci-après, a pour objet au moins l'une des réalisations énumérées aux points suivants :

1 - Une matrice élastomère comprenant

- un élastomère thermoplastique tribloc ayant un bloc élastomère diénique central et deux blocs thermoplastiques terminaux comprenant des unités $\alpha$-méthylstyrène liés au bloc élastomère diénique,
- de 2% à 20% en poids par rapport au poids total de la matrice élastomère, d'un élastomère thermoplastique dibloc ayant un bloc élastomère diénique et un bloc thermoplastique comprenant des unités $\alpha$-méthylstyrène,
- plus de 10% en poids par rapport au poids total de la matrice élastomère d'un polymère thermoplastique comprenant des unités $\alpha$-méthylstyrène,

le taux des blocs thermoplastiques des élastomères thermoplastiques tribloc et dibloc étant d'au moins 10% en poids par rapport au poids total des élastomères thermoplastiques tribloc et dibloc,
le taux de chaînes thermoplastiques comprenant des unités $\alpha$-méthylstyrène étant d'au plus 55% en poids par rapport au poids total de la matrice élastomère,
les chaînes thermoplastiques comprenant des unités $\alpha$-méthylstyrène étant constituées des chaînes du polymère thermoplastique comprenant des unités $\alpha$-méthylstyrène et des blocs thermoplastiques des élastomères thermoplastiques tribloc et dibloc .

2 - Une matrice élastomère selon la réalisation précédente caractérisée en ce qu'elle comprend au plus 45% en poids du polymère thermoplastique comprenant des unités $\alpha$-méthylstyrène par rapport au poids total de la matrice élastomère.

3 - Une matrice élastomère selon l'une des réalisations précédentes caractérisée en ce qu'elle comprend au moins 20% en poids par rapport au poids total de la matrice élastomère de chaines thermoplastiques comprenant des unités $\alpha$-méthylstyrène, de préférence au moins 25% en poids.

4 - Une matrice élastomère selon l'une des réalisations précédentes caractérisée en ce qu'elle comprend au moins 15% en poids du polymère thermoplastique comprenant des unités $\alpha$-méthylstyrène par rapport au poids total de la matrice élastomère.

5 - Une matrice élastomère selon l'une des réalisations précédentes caractérisée en ce qu'elle comprend majoritairement l'élastomère thermoplastique tribloc ayant un bloc élastomère diénique et deux blocs thermoplastiques comprenant des unités $\alpha$-méthylstyrène liés au bloc élastomère diénique.

6 - Une matrice élastomère selon l'une des réalisations précédentes caractérisée en ce qu'elle comprend au plus 80% en poids de l'élastomère thermoplastique tribloc ayant un bloc élastomère diénique et deux blocs thermoplastiques comprenant des unités $\alpha$-méthylstyrène liés au bloc élastomère diénique, par rapport au poids total de la matrice élastomère.

7 - Une matrice élastomère selon l'une quelconque des réalisations précédentes caractérisée en ce que le taux des blocs thermoplastiques comprenant des unités $\alpha$-méthylstyrène est d'au moins 15% en poids par rapport au poids total des élastomères thermoplastiques tribloc et dibloc.

8 - Une matrice élastomère selon la réalisation précédente caractérisée en ce que le taux de blocs thermoplastiques comprenant des unités α-méthylstyrène est d'au plus 45% poids, de préférence 40% en poids par rapport au poids total des élastomères thermoplastiques tribloc et dibloc.

9 - Une matrice élastomère selon l'une des réalisations précédentes caractérisée en ce qu'elle comprend un taux de chaînes thermoplastiques comprenant des unités α-méthylstyrène d'au plus 50% en poids par rapport au poids total de la matrice élastomère.

10 - Une matrice élastomère selon l'une des réalisations précédentes caractérisée en ce que les blocs élastomères diéniques comprennent des unités issues d'un monomère diène ayant de 4 à 12 atomes de carbone.

11 - Une matrice élastomère selon l'une des réalisations précédentes caractérisée en ce que les blocs élastomères diéniques comprennent des unités issues de butadiène.

12 - Une matrice élastomère selon l'une des réalisations précédentes caractérisée en ce que les blocs élastomères diéniques comprennent en outre des unités issues d'un monomère vinylaromatique.

13 - Une matrice élastomère selon la réalisation précédente caractérisée en ce que le monomère vinylaromatique est le styrène.

14 - Une matrice élastomère selon l'une des réalisations précédentes caractérisée en ce que les blocs élastomères diéniques sont tout ou partiellement hydrogénés.

15 - Une matrice élastomère selon l'une des réalisations précédentes caractérisée en ce que les blocs thermoplastiques comprenant des unités α-méthylstyrène comprennent majoritairement des unités issues d'α-méthylstyrène.

16 - Une matrice élastomère selon la réalisation précédente caractérisée en ce que les blocs thermoplastiques comprenant des unités α-méthylstyrène comprend en outre des unités issues d'au moins un autre monomère vinylaromatique, de préférence le styrène.

17 - Une matrice élastomère selon l'une des réalisations 1 à 15 caractérisée en ce que les blocs thermoplastiques comprenant des unités α-méthylstyrène sont essentiellement constitués d'unités α-méthylstyrène.

18 - Une matrice élastomère selon l'une des réalisations précédentes caractérisée en ce que le polymère thermoplastique comprenant des unités α-méthylstyrène comprend majoritairement des unités issues d'α-méthylstyrène.

19 - Une matrice élastomère selon l'une des réalisations précédentes caractérisée en ce que le polymère thermoplastique comprenant des unités α-méthylstyrène comprend des unités issues d'au moins un autre monomère vinylaromatique, de préférence le styrène.

20 - Une matrice élastomère selon l'une des réalisations 1 à 18 caractérisée en ce que le polymère thermoplastique comprenant des unités α-méthylstyrène est un homopolymère d'α-méthylstyrène.

21 - Une matrice élastomère selon l'une des réalisations précédentes caractérisée en ce que au moins l'une des caractéristiques suivantes est observée, de préférence deux, de préférence trois, de préférence quatre, de préférence cinq, de préférence toutes,

- les blocs diéniques des élastomères thermoplastiques tribloc et dibloc comprennent des unités issues du butadiène,
- les blocs thermoplastiques des élastomères thermoplastiques tribloc et dibloc sont constitués de poly(α-méthylstyrène),
- le polymère thermoplastique comprenant des unités α-méthylstyrène est un poly(α-méthylstyrène),
- le taux de blocs thermoplastiques des élastomères thermoplastiques tribloc et dibloc comprenant des unités α-méthylstyrène est d'au moins 10% en poids et d'au plus 45% en poids par rapport au poids total de l'élastomère thermoplastique tribloc et de l'élastomère thermoplastique dibloc,
- la matrice comprend plus de 10%, de préférence au moins 15%, en poids et au plus 45% en poids par rapport au poids total de la matrice élastomère d'un polymère thermoplastique comprenant des unités α-méthylstyrène,
- le taux de chaînes thermoplastiques comprenant des unités α-méthylstyrène est d'au moins 20% en poids et d'au plus 55% en poids par rapport au poids total de la matrice élastomère.

**Définitions**

Dans la présente, sauf indication expresse différente, tous les pourcentages (%) indiqués sont des pourcentages (%) en masse.

D'autre part, tout intervalle de valeurs désigné par l'expression "entre a et b" représente le domaine à l'intérieur des limites a et b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente demande, par "majoritairement" ou "majoritaire" en liaison avec un composé, on entend que ce composé est majoritaire parmi les composés du même type dans une composition, c'est-à-dire que c'est celui qui représente la plus grande fraction pondérale parmi les composés du même type. Ainsi, une unité issue d'un monomère dite majoritaire dans un polymère est celle représentant la plus grande fraction pondérale parmi les unités constituant le polymère, par rapport au poids total dudit polymère. Ou encore, un composant est dit majoritaire dans une composition lorsqu'il représente la plus grande fraction pondérale parmi les composants constituant la composition, par rapport au poids total de ladite composition. Dans un système comprenant un seul élément d'un certain type, celui-ci est majoritaire au sens de la présente invention.

Dans la présente demande, on entend par "matrice élastomère" un mélange constitué de polymères et présentant des propriétés élastomériques.

Par poly($\alpha$-méthylstyrène) on entend communément un homopolymère d'$\alpha$-méthylstyrène.

Dans la présente demande, on entend par "chaînes thermoplastiques comprenant des unités $\alpha$-méthylstyrène", les chaînes du polymère thermoplastique comprenant des unités $\alpha$-méthylstyrène et des blocs thermoplastiques comprenant des unités $\alpha$-méthylstyrène des élastomères thermoplastiques tribloc et dibloc.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les monomères, les polymères, etc.

**Description détaillée de l'invention**

L'invention concerne une matrice élastomère comprenant :

- un élastomère thermoplastique tribloc ayant un bloc élastomère diénique central et deux blocs thermoplastiques terminaux comprenant des unités $\alpha$-méthylstyrène liés au bloc élastomère diénique,
- de 2 à 20% en poids par rapport au poids total de la matrice élastomère, d'un élastomère thermoplastique dibloc ayant un bloc élastomère diénique et un bloc thermoplastique comprenant des unités $\alpha$-méthylstyrène,
- plus de 10% en poids par rapport au poids total de la matrice élastomère d'un polymère thermoplastique comprenant des unités $\alpha$-méthylstyrène,

le taux de blocs thermoplastiques des élastomères thermoplastiques tribloc et dibloc étant d'au moins 10% en poids par rapport au poids de total des élastomères thermoplastiques tribloc et dibloc,

le taux de chaînes thermoplastiques comprenant des unités $\alpha$-méthylstyrène étant d'au plus 55% en poids par rapport au poids total de la matrice élastomère,

les chaînes thermoplastiques comprenant des unités $\alpha$-méthylstyrène étant constituées des chaînes du polymère thermoplastique comprenant des unités $\alpha$-méthylstyrène et des blocs thermoplastiques comprenant des unités $\alpha$-méthylstyrène des élastomères thermoplastiques tribloc et dibloc.

**A - La matrice élastomère**

Au sein de la matrice élastomère, la combinaison des caractéristiques relatives aux taux d'élastomère thermoplastique à blocs et de polymère thermoplastique, au taux de blocs thermoplastiques et au taux de chaînes thermoplastiques permet de réunir les propriétés élastomériques et le caractère thermoplastique de la matrice, tout en permettant d'atteindre une diminution significative de l'hystérèse par rapport à une matrice comprenant un même taux de chaînes thermoplastiques total mais moins de polymère thermoplastique.

Selon l'invention, la matrice élastomère comprend un élastomère thermoplastique tribloc ayant un bloc élastomère diénique central et deux blocs thermoplastiques terminaux liés au bloc élastomère diénique comprenant

des unités $\alpha$-méthylstyrène.

Le taux minimal de l'élastomère thermoplastique tribloc dans la matrice élastomère est déterminé par les propriétés liées au bloc élastomère diénique. La matrice élastomère doit posséder un caractère élastomère. Selon certains modes de réalisation de l'invention, l'élastomère thermoplastique tribloc est le composant majoritaire en poids de la matrice élastomère, c'est-à-dire que la fraction pondérale de l'élastomère thermoplastique tribloc est la plus grande parmi celles des polymères composant la matrice. Selon ces modes de réalisation, l'élastomère thermoplastique tribloc peut être présent dans la matrice élastomère dans des proportions d'au moins 50% en poids par rapport au poids total de la matrice élastomère, de préférence d'au moins 65% en poids. Le taux de l'élastomère thermoplastique tribloc est d'au plus 88% en poids du poids total de la matrice élastomère. Selon certains modes de réalisation, ce taux est avantageusement d'au plus 80% en poids du poids total de la matrice élastomère.

Selon l'invention, la matrice élastomère comprend également 2% à 20% en poids du poids total de la matrice élastomère d'un polymère dibloc composé d'un bloc élastomère diénique et d'un bloc thermoplastique comprenant des unités $\alpha$-méthylstyrène.

Selon l'invention, dans la matrice élastomère, les blocs thermoplastiques de ces élastomères à blocs comprenant des unités $\alpha$-méthylstyrène représentent au moins 10% en poids par rapport au poids total des élastomères thermoplastiques tribloc et dibloc. Le polymère thermoplastique comprenant des unités $\alpha$-méthylstyrène, autre composant de la matrice élastomère, n'est pas considéré comme un bloc thermoplastique selon l'invention. En d'autres termes, selon l'invention, les blocs thermoplastiques comprenant des unités $\alpha$-méthylstyrène représentent au moins 10% en poids par rapport au poids des polymères à blocs de la matrice.

Préférentiellement, les blocs thermoplastiques comprenant des unités $\alpha$-méthylstyrène représentent au plus 45% en poids, de préférence encore au plus 40% en poids, par rapport au poids total des élastomères thermoplastiques tribloc et dibloc. Au-delà de 45% en poids, le caractère élastomère de l'élastomères thermoplastique utilisable selon l'invention peut être dégradé.

Selon l'invention, la matrice élastomère comprend encore un polymère thermoplastique comprenant des unités $\alpha$-méthylstyrène dans des proportions de plus de 10% en poids par rapport au poids total de la matrice élastomère. Au-dessus de 10% en poids de polymère thermoplastique comprenant des unités $\alpha$-méthylstyrène on observe une amélioration des propriétés hystérétiques par rapport à une matrice comprenant le même taux de chaînes thermoplastiques, mais moins de 10% en poids de polymère thermoplastique comprenant des unités $\alpha$-méthylstyrène.

Selon un mode de réalisation de l'invention, la matrice élastomère comprend au plus 45% en poids, par rapport au poids total de la matrice élastomère, de polymère thermoplastique comprenant des unités $\alpha$-méthylstyrène. En effet, l'homme du métier comprendra que la matrice selon l'invention présente des propriétés élastomères et au-delà de 45% en poids, le compromis de propriétés lié à cette nature élastomérique se dégrade.

Selon un mode de réalisation particulier de l'invention, la matrice élastomère comprend au moins 15% en poids par rapport au poids total de la matrice élastomère d'un polymère thermoplastique comprenant des unités $\alpha$-méthylstyrène.

Selon un mode de réalisation particulier de l'invention, le taux de polymère thermoplastique comprenant des unités $\alpha$-méthylstyrène dans la matrice élastomère est de plus de 10% en poids, notamment d'au moins 15% en poids, et d'au plus 45% en poids par rapport au poids total de la matrice élastomère.

La matrice élastomère selon l'invention comprend un taux de chaînes thermoplastiques comprenant des unités $\alpha$-méthylstyrène d'au plus 55% en poids, de préférence d'au plus 50% en poids, par rapport au poids total de la matrice élastomère. On entend par " chaînes thermoplastiques comprenant des unités $\alpha$-méthylstyrène" la totalité des chaines thermoplastiques constituée par les chaînes du polymère thermoplastique comprenant des unités $\alpha$-méthylstyrène et des blocs thermoplastiques comprenant des unités $\alpha$-méthylstyrène des élastomères thermoplastiques tribloc et dibloc, Au-delà de 55% en poids, le caractère élastomère de la matrice peut être dégradé ainsi que les propriétés associées à l'élasticité.

Selon des modes de réalisation de l'invention, la matrice élastomère selon l'invention présente un taux de chaînes thermoplastiques comprenant des unités $\alpha$-méthylstyrène d'au moins 20% en poids par rapport au poids total de la matrice élastomère. Selon certains de ces modes, le taux de chaînes thermoplastiques comprenant des unités $\alpha$-méthylstyrène peut être d'au moins 25% en poids par rapport au poids total de la matrice élastomère.

**B - Les polymères à blocs :**

L'élastomère thermoplastique tribloc et l'élastomère thermoplastique dibloc de la matrice élastomère selon l'invention sont composés respectivement de trois et deux blocs polymères. L'élastomère thermoplastique tribloc possède un bloc élastomère diénique central. L'élastomère thermoplastique dibloc possède un bloc élastomère diénique qui peut être de même nature que celui de l'élastomère thermoplastique tribloc.

Par élastomère diénique on entend un élastomère issu au moins en partie (i.e., un homopolymère ou un copolymère) de monomères diènes (monomères porteurs de deux doubles liaisons carbone-carbone, conjuguées ou non).

Selon un mode de réalisation de l'invention, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués ayant 4 à 12 atomes de carbone entre eux ou avec un ou plusieurs composés vinylaromatiques ayant de 8 à 20 atomes de carbone.

A titre de diènes conjugués, utilisables conformément à l'invention conviennent notamment le butadiène-1,3, le 2-méthyl-1,3-butadiène (isoprène), les 2,3-di(alkyl en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, le phenyl-1,3-butadiène, le 1,3-pentadiène et le 2,4-hexadiène.

Selon un mode de réalisation de l'invention, l'élastomère diénique comprend des unités issues de monomère 1,3-diène ayant 4 à 12 atomes de carbone, plus particulièrement, l'élastomère diénique comprend des unités issues de butadiène ou d'isoprène.

A titre de composés vinylaromatiques conviennent notamment le styrène, l'α-méthylstyrène, l'ortho- méta-, para-méthylstyrène, le mélange commercial "vinyle-toluène", le para-tertiobutylstyrène, les méthoxystyrènes, le vinylmésitylène, le divinylbenzène et le vinylnaphtalène.

Selon un mode de réalisation de l'invention, l'élastomère diénique comprend en outre des unités issues d'un monomère vinylaromatique, plus particulièrement du styrène.

L'élastomère diénique est préférentiellement un polybutadiène (BR), un polyisoprène de synthèse (IR), un copolymère de butadiène, en particulier un copolymère de butadiène et d'un monomère vinyl aromatique, notamment le styrène, un copolymère d'isoprène. Selon un mode de réalisation, l'élastomère diénique est un polybutadiène ou un copolymère du butadiène.

L'élastomère diénique peut avoir toute microstructure qui est fonction des conditions de polymérisation utilisées. L'élastomère diénique peut également être couplé ou étoilé au moyen d'un agent de couplage ou d'étoilage portant ou non un groupement fonctionnel.

Selon un mode de réalisation de l'invention, l'élastomère diénique constituant le bloc central de l'élastomère thermoplastique est tout ou partiellement hydrogéné. Une hydrogénation partielle est habituellement préférée lorsqu'une réticulation ultérieure de l'élastomère thermoplastique est envisagée au moyen des doubles-liaisons carbone - carbone de l'élastomère. Une hydrogénation totale peut également être envisagée au vu notamment de la formation de nodules rigides, formés par des zones d'association de blocs thermoplastiques entre eux, jouant le rôle de nœuds de réticulation.

De préférence pour l'invention, le bloc élastomère diénique de l'élastomère thermoplastique présente au total, une masse molaire moyenne en nombre (« Mn ») d'au moins 25 000 g/mol, de préférence d'au moins 35 000 g/mol et d'au plus 350 000 g/mol, de préférence d'au plus 250 000 g/mol, de manière à conférer aux élastomères thermoplastiques de bonnes propriétés élastomériques et une tenue mécanique satisfaisante. La masse molaire moyenne en nombre du bloc élastomère diénique de l'élastomère thermoplastique peut être déterminée par chromatographie d'exclusion stérique de manière connue de l'homme du métier en utilisant une courbe d'étalonnage réalisée à partir de diènes étalons.

Selon des modes de réalisation particuliers, le bloc élastomère diénique de l'élastomère thermoplastique tribloc et le bloc élastomère diénique de l'élastomère thermoplastique dibloc, sont de même nature. C'est-à-dire qu'ils sont de même microstructure et de même macrostructure.

L'élastomère thermoplastique de la matrice élastomère selon l'invention comprend deux blocs thermoplastiques terminaux comprenant des unités α-méthylstyrène.

Dans le cadre de l'invention, par bloc thermoplastique comprenant des unités α-méthylstyrène, on entend un bloc thermoplastique comprenant des unités issues d'α-méthylstyrène et ayant une température de transition vitreuse supérieure ou égale à 100°C, de préférence d'au moins 120°C, et d'au plus 180°C. La Tg des blocs thermoplastiques est mesurée selon la méthode décrite plus loin.

De préférence, les blocs thermoplastiques des élastomères thermoplastiques présentent au total, une masse molaire moyenne en nombre (« Mn ») d'au moins 5 000 g/mol, de préférence au moins 7 000 g/mol, et d'au plus 100 000 g/mol, de préférence d'au plus 50 000 g/mol. La masse molaire moyenne en nombre du bloc thermoplastique de l'élastomère thermoplastique peut être déterminée par chromatographie d'exclusion stérique de manière connue de l'homme du métier et exprimée ici relativement à des étalons polystyrène.

Selon des modes de réalisation de l'invention préférentiels, les blocs thermoplastiques comprenant des unités α-méthylstyrène de l'élastomère thermoplastique comprennent majoritairement des unités issues d'α-méthylstyrène afin de procurer une bonne tenue thermique à l'élastomère thermoplastique, ainsi qu'à la matrice élastomère. Autrement dit, selon ce mode de réalisation, chaque bloc thermoplastique comprend de préférence au moins 50% en poids, de préférence au moins 70% en poids, d'unités issues du monomère α-méthylstyrène.

Lorsque les blocs thermoplastiques comprenant des unités α-méthylstyrène de l'élastomère thermoplastique comprennent en outre des unités issues d'au moins un autre monomère, celui-ci peut être vinylaromatique, de préférence le styrène.

Selon des modes de réalisation particulièrement avantageux, les blocs thermoplastiques de l'élastomère thermoplastique sont essentiellement constitués d'unités α-méthylstyrène, c'est-à-dire que les blocs thermoplastiques ne comprennent pas d'unités issues d'un autre monomère que l' α-méthylstyrène. Ainsi, on observe une meilleure tenue thermique à plus haute température de l'élastomère thermoplastique, ainsi que de la matrice élastomère Le taux minimum de blocs thermoplastiques dans les élastomères thermoplastiques peut varier en fonction des conditions d'utilisation des élastomères thermoplastiques.

D'autre part, la capacité des élastomères thermoplastiques à se déformer lors de la fabrication d'un objet peut également contribuer à déterminer la proportion des blocs thermoplastiques dans les élastomères thermoplastiques utilisables selon l'invention.

Selon l'invention, les blocs thermoplastiques comprenant des unité α-méthylstyrène représentent au moins 10% en poids par rapport au poids total des élastomères thermoplastiques tribloc et dibloc de la matrice élastomère. Selon certains modes de réalisation de l'invention, les blocs thermoplastiques comprenant des unité α-méthylstyrène représentent au moins 15% en poids par rapport au poids total des élastomères thermoplastiques tribloc et dibloc de la matrice élastomère.

Selon un mode de réalisation de l'invention, les blocs thermoplastiques comprenant des unités α-méthylstyrène représentent au plus 45 % en poids, de préférence au plus 40% en poids, par rapport au poids total des élastomères thermoplastiques tribloc et dibloc de la matrice élastomère.

L'élastomère thermoplastique tribloc et l'élastomère thermoplastique dibloc conformes à l'invention peuvent être fabriqués de manière connue selon divers modes de synthèse décrits dans l'art antérieur.

Un mode de synthèse d'un élastomère thermoplastique tribloc consiste par exemple à polymériser par voie anionique l'α-méthylstyrène afin de former concomitamment les deux blocs thermoplastiques en présence de polydiényldilithium à titre d'initiateur de polymérisation. Par exemple, WO8505116A1 et EP0014947A1 décrivent de telles méthodes qui comprennent la copolymérisation styrène et d'α-méthylstyrène pour générer les blocs thermoplastiques. On obtient ainsi un copolymère tribloc de type poly(α-méthylstyrène-co-styrène)-b-polydiène-b-poly(α-méthylstyrène-co-styrène). Des modes de synthèse analogues peuvent être envisagés pour fabriquer des polymères tribloc poly(alpha-méthylstyrène)-b-polydiène-poly(alpha-méthylstyrène) en utilisant un polydiényllithium à titre d'initiateur de polymérisation. Un tel procédé est par exemple décrit dans FR3045615.

Un autre mode de synthèse consiste à polymériser par voie anionique l'α-méthylstyrène dans un premier temps. Puis, dans un deuxième temps, on polymérise le monomère diène sur les chaînes vivantes obtenues comprenant des unités α-méthylstyrène. On obtient ainsi un polymère dibloc (thermoplastique comprenant des unités α-méthylstyrène)-b-polydiène dont l'extrémité diényle est vivante. On peut stopper de manière classique la réaction de polymérisation à ce stade par l'ajout d'un composé protique, puis récupérer un élastomère diénique dibloc.

Alternativement selon cet autre mode de synthèse, en vue d'obtenir un élastomère thermoplastique tribloc, on ajoute à ce stade un agent de couplage pour coupler les blocs diényles des chaînes dont les extrémités diényles sont réactives. Cette étape est réalisée de manière connue en soi. Les agents de couplage contiennent généralement un atome de silicium ou d'étain, substitué par au moins deux groupements réactifs vis à vis de l'extrémité carbanion des chaînes polymères vivantes. A titre d'exemple d'agent de couplage, on peut citer ceux ayant deux groupements réactifs tels que les di -halogénoétain et les dihalogénosilane, notamment le dichlorure de dibutyl étain ou le diméthyldichlorosilane, ou encore les dialcoxysilanes. A l'issue de cette étape de couplage, un tribloc (thermoplastique comprenant des unités α-méthylstyrène)-b-polydiène-b-(thermoplastique comprenant des unités α-méthylstyrène)- se forme.

L'homme du métier comprendra qu'en fonction des conditions opératoires selon ce dernier mode de synthèse, le procédé peut conduire à un produit constitué d'un mélange, outre du tribloc (thermoplastique comprenant des unités α-méthylstyrène)-b-élastomère diénique-b-(thermoplastique comprenant des unités α-méthylstyrène), d'autres populations de macromolécules telles que des polymères thermoplastiques comprenant des unités α-méthylstyrène et des polymères dibloc (thermoplastique comprenant des unités α-méthylstyrène)-b-élastomère diénique. L'homme du métier sait déterminer les conditions de synthèse pour favoriser la formation de certaines populations plutôt que d'autres. Par exemple, l'homme du métier pourra, en modulant notamment le taux et la nature de l'agent de couplage, atteindre les taux visés respectivement d'élastomère thermoplastique tribloc et d'élastomère thermoplastique dibloc.

De tels procédés de synthèse d'élastomère thermoplastiques à blocs sont décrits par exemple, dans US4302559A. La synthèse du copolymère à blocs comprend une première étape de polymérisation de l'α-méthylstyrène à basse température en présence d'un agent polaire. Dans une deuxième étape, une petite quantité de diène conjugué est ajouté afin d'obtenir un bloc polydiényle vivant pour éviter la dépolymérisation de l'α-méthylstyrène. Dans une troisième étape, en présence d'un autre composé polaire, l'ajout de monomère diène conjugué permet d'insérer l'α-méthylstyrène résiduel de manière statistique. Pour obtenir un copolymère tribloc, le polymère issu de la dernière étape de polymérisation est couplé à l'aide d'un agent de couplage. Le bloc élastomère diénique central du copolymère tribloc est selon ce mode de synthèse un copolymère statistique poly(butadiène-co-α-méthylstyrène).

D'autres procédés mettant en œuvre ce mode de synthèse d'un copolymère tribloc poly(alpha-méthylstyrène)-b-polydiène-b-poly(alpha-méthylstyrène) sont décrits permettant d'obtenir un bloc élastomère diénique central exempt d'alpha-méthylstyrène. Par exemple, dans le document FR2243214. Le procédé consiste, dans une première étape, à homopolymériser l'alpha-méthylstyrène en milieu concentré à des températures entre 0°C et 40°C. A l'issue de cette étape, le diène conjugué et le solvant nécessaires à la synthèse du bloc poly(diène conjugué) sont ajoutés. A l'issue cette dernière étape de polymérisation, le polymère obtenu est couplé à l'aide d'un agent de couplage. Plus récemment, WO2020070406A1 décrit un autre procédé permettant la synthèse d'un copolymère tribloc poly(alpha-méthylstyrène)-b-polydiène-b-poly(alpha-méthylstyrène) dont le bloc élastomère diénique central est également exempt d'alpha-méthylstyrène.

Dans le cadre de l'invention, la matrice élastomère peut comprendre un ou plusieurs élastomères thermoplastiques tribloc ayant un bloc élastomère diénique central et deux blocs thermoplastiques terminaux comprenant des unités $\alpha$-méthylstyrène. De la même manière, la matrice élastomère peut comprendre 2% à 20% en poids d'un ou de plusieurs élastomères thermoplastiques dibloc ayant un bloc élastomère diénique et un bloc thermoplastique comprenant des unités $\alpha$-méthylstyrène.

### C - Le polymère thermoplastique comprenant des unités $\alpha$-méthylstyrène

Dans la matrice élastomère selon l'invention, le polymère thermoplastique comprenant des unités $\alpha$-méthyls-tyrène peut être de même nature ou de nature différente des blocs thermoplastiques terminaux de l'élastomère thermoplastique tribloc.

Le polymère thermoplastique comprenant des unités $\alpha$-méthylstyrène peut en outre comprendre des unités issues d'au moins un autre monomère pour autant que le polymère conserve son comportement thermoplastique. Cet autre monomère peut être un monomère vinylaromatique tel que défini plus haut. Selon ce mode de réalisation de l'invention, l'autre monomère est de préférence le styrène.

Selon un mode de réalisation préférentiel, le polymère thermoplastique comprend majoritairement des unités issues d'$\alpha$-méthylstyrène afin de procurer une bonne tenue thermique à la matrice élastomère selon l'invention. Selon ce mode de réalisation, le polymère thermoplastique comprend de préférence au moins 50% en poids, de préférence au moins 70% en poids, d'unités issues du monomère $\alpha$-méthylstyrène. Plus particulièrement selon ce mode de réalisation, le polymère thermoplastique est avantageusement un homopolymère d'$\alpha$-méthylstyrène.

De préférence, le polymère thermoplastique comprenant des unités $\alpha$-méthylstyrène présente une masse molaire moyenne en nombre (« Mn ») d'au moins 5 000 g/mol et au plus 150 000 g/mol, de préférence au plus 100 000 g/mol, plus préférentiellement au plus 50 000 g/mol. La masse molaire moyenne en nombre du polymère thermoplastique peut être mesurée par chromatographie d'exclusion stérique de manière connue de l'homme du métier en utilisant une courbe d'étalonnage réalisée à partir de polystyrènes étalons.

Dans le cadre de l'invention le polymère thermoplastique comprenant des unités $\alpha$-méthylstyrène présente une température de transition vitreuse supérieure ou égale à 100°C, de préférence d'au moins 120°C, et d'au plus 180°C. La Tg du polymère thermoplastique est mesurée selon la méthode décrite plus loin.

Le polymère thermoplastique comprenant des unités $\alpha$-méthylstyrène est disponible dans le commerce ou peut être fabriqué de manière connue, par exemple par polymérisation par voie anionique de l'$\alpha$-méthylstyrène en présence d'un initiateur de polymérisation organo métallique, par exemple un composé organolithium tel qu'un alkyllithium. Le document FR2852960A1 décrit un mode de synthèse de poly(alpha-méthylstyrène).

A titre de polymère thermoplastique comprenant des unités $\alpha$-méthylstyrène du commerce, on peut citer celui commercialisé par la société ABCR.

Dans le cadre de l'invention la matrice élastomère peut comprendre un ou plusieurs polymères thermoplastiques différents comprenant des unités $\alpha$-méthylstyrène.

Les différents modes de réalisation de l'invention, préférentiels ou non, relatifs aux polymères à blocs et au polymère thermoplastique sont combinables entre eux.

Ainsi selon un mode de réalisation particulièrement avantageux de l'invention, la matrice élastomère présente au moins l'une des caractéristiques suivantes, de préférence deux, de préférence trois, de préférence quatre, de préférence cinq, de préférence six, de préférence toutes,

- les blocs diéniques des élastomères thermoplastiques tribloc et dibloc comprennent des unités issues du butadiène,
- les blocs thermoplastiques des élastomères thermoplastiques tribloc et dibloc sont constitués de poly($\alpha$-méthyls-tyrène),
- le polymère thermoplastique comprenant des unités $\alpha$-méthylstyrène est un poly($\alpha$-méthylstyrène),

- le taux de blocs thermoplastiques des élastomères thermoplastiques tribloc et dibloc comprenant des unités $\alpha$-méthylstyrène est d'au moins 10% en poids et d'au plus 45% en poids par rapport au poids total de l'élastomère thermoplastique tribloc et de l'élastomère thermoplastique dibloc,
- la matrice comprend plus de 10%, de préférence au moins 15%, en poids et au plus 45% en poids par rapport au poids total de la matrice élastomère d'un polymère thermoplastique comprenant des unités $\alpha$-méthylstyrène,

- le taux de chaînes thermoplastiques comprenant des unités α-méthylstyrène est d'au moins 20% en poids et d'au plus 55% en poids par rapport au poids total de la matrice élastomère.

**D** - **Préparation de la matrice élastomère**

Selon un mode de réalisation, la matrice élastomère de l'invention peut être obtenue par mélangeage en solution de l'élastomère thermoplastique tribloc, de l'élastomère thermoplastique dibloc et du polymère thermoplastique comprenant des unités α-méthylstyrène, chacun obtenu séparément. Selon un autre mode de réalisation, le mélange de l'élastomère thermoplastique tribloc et de l'élastomère thermoplastique dibloc est obtenu au cours d'un procédé de synthèse unique comme expliqué précédemment. Ce mélange d'élastomères thermoplastiques dibloc et tribloc est ensuite mélangé au polymère thermoplastique comprenant des unités α-méthylstyrène. Selon un autre mode de réalisation encore, la matrice élastomère selon l'invention peut être obtenue au cours d'un procédé de synthèse one-pot consistant à polymériser par voie anionique l'α-méthylstyrène dans un premier temps. On stoppe de manière classique la polymérisation d'une partie des chaînes à ce stade par l'ajout d'un composé protique pour générer le polymère thermoplastique dont le taux est contrôlé en ajustant la quantité d'agent protique. On poursuit la synthèse comme expliqué précédemment pour former ensuite les élastomères thermoplastiques dibloc et tribloc.

Selon l'un quelconque de ces modes de réalisation, les polymères peuvent être mis en solution ensemble dans un solvant commun.

Alternativement, selon l'un quelconque de ces modes de réalisation, les polymères peuvent être mis en solution séparément dans des solvants identiques ou différents, mais miscibles entre eux, et on procède ensuite au mélangeage des solutions.

A titre de solvant on peut citer tout solvant hydrocarboné inerte qui peut être par exemple un hydrocarbure aliphatique ou alicyclique comme le pentane, l'hexane, l'heptane, l'isooctane, le cyclohexane, le méthylcyclohexane ou un hydrocarbure aromatique comme le benzène, le toluène, le xylène.

Une fois le mélangeage terminé, le solvant peut être éliminé par exemple par stripping. A ce stade, la matrice élastomère peut ensuite être séchée et récupérée.

La matrice élastomère selon l'invention, peut être utilisée dans des compositions avec un ou plusieurs autres composés. L'intérêt que suscitent les élastomères thermoplastiques ainsi que les propriétés hystérétiques améliorées de la matrice élastomère selon l'invention, permettent d'envisager une utilisation dans de nombreux domaines. On peut notamment citer une utilisation dans la fabrication de divers produits à base de caoutchouc tels que les tuyaux, les courroies, les pneumatiques, les chenilles, les semelles de chaussures, les articles chirurgicaux...

**EXEMPLES**

**I. Description des méthodes de mesure**

**A** - **Résonance Magnétique Nucléaire du proton (RMN $^1$H) pour la mesure du taux de poly(α-méthylstyrène) dans les produits issus de la synthèse d'élastomères thermoplastiques à blocs et dans les matrices élastomères**

La caractérisation spectrale et les mesures de la microstructure de polymères sont réalisées par spectroscopie de Résonance Magnétique Nucléaire (RMN) en phase liquide. La RMN du proton permet de distinguer et de quantifier les motifs butadiène 1-2, butadiène 1-4 et α-méthylstyrène de la matrice élastomère. Pour ces mesures, un spectromètre Bruker Avance III HD $\geq$ 400 MHz est utilisé, équipé d'une sonde Bruker cryo-BBFO z-grad 5 mm.

Les expériences RMN 1D $^1$H sont enregistrées à l'aide d'une impulsion radiofréquence avec un angle de basculement de 30°, le nombre de répétitions est de 64 avec un délai de recyclage de 5 secondes. Les expériences sont réalisées à 25 °C.

La préparation des tubes RMN est réalisée de sorte que 25 mg d'échantillon sont solubilisés dans 1 mL de $CS_2$ avec ajout de 100 µL de $C_6D_{12}$. L'axe des déplacements chimiques $^1$H est calibré par rapport au signal de l'impureté du solvant $CS_2$ utilisé à $\delta_{1H}$ = 7,18 ppm.

La quantification de la microstructure est réalisée en pourcentage molaire (% molaire) et en pourcentage massique (% massique) à partir de l'intégration des spectres RMN 1D $^1$H à l'aide du logiciel Topspin en utilisant les calculs connus de l'homme de l'art. Les zones d'intégration considérées pour la quantification sont des zones de signature spectrales des unités monomères connues de l'homme du métier. La quantité de chaînes thermoplastiques comprenant des unités α-méthylstyrène est déterminée à partir de ces calculs.

**B** - **Chromatographie d'exclusion stérique (SEC)** :

**Mesure de la masse molaire des échantillons**

La technique SEC (« Size Exclusion Chromatography ») permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) ainsi que la masse molaire au pic (Mp) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 g.L$^{-1}$. Puis la solution est filtrée sur filtre de porosité 0,45$\mu$m avant injection.

L'appareillage utilisé est une chaîne chromatographique "WATERS alliance". Le solvant d'élution est soit le tétrahydrofurane antioxydé, avec BHT (hydroxytoluène butylé) de 250 ppm, soit le tétrahydrofurane sans antioxydant, le débit est de 1 mL.min-1, la température du système de 35° C et la durée d'analyse de 45 min. Les colonnes utilisées sont soit un jeu de trois colonnes AGILENT de dénomination commerciale "POLYPORE" soit un jeu de quatre colonnes AGILENT de dénomination commerciale deux "PL GEL MIXED D" et deux "PL GEL MIXED E". Le volume injecté de la solution de l'échantillon de polymère est 100 $\mu$L. Le détecteur est un réfractomètre différentiel (RI) "WATERS 2410" et le logiciel d'exploitation des données chromatographiques est le système "WATERS EMPOWER".

Les masses molaires moyennes en nombre calculées sont relatives à une courbe d'étalonnage réalisée à partir de polystyrènes étalons commerciaux "PSS-pskit1h-3" dans le cas des polymères thermoplastiques comprenant des unités $\alpha$-méthylstyrène seuls.

Les masses molaires moyennes en nombre calculées sont relatives à une courbe d'étalonnage réalisée à partir de polybutadiènes étalons commerciaux "PSS-bdfkit" dans le cas de produits comprenant des élastomères thermoplastiques dibloc et/ou tribloc contenant des unités butadiènes.

Dans le cas des produits issus de la synthèse des élastomères thermoplastiques à blocs (bloc thermoplastique comprenant des unités $\alpha$-méthylstyrène-b-polydiène-b- bloc thermoplastique comprenant des unités $\alpha$-méthylstyrène) contenant moins de 10% en masse de polymère thermoplastique comprenant des unités poly($\alpha$-méthylstyrène), la répartition des différentes espèces du produit est réalisée à partir de l'intégration du signal RI des chromatogrammes SEC. La proportion massique de chaque espèce est rapportée à l'intégrale de l'ensemble des signaux RI du chromatogramme.

Dans le cas des produits contenant plus de 10% en masse de polymère thermoplastique comprenant des unités poly($\alpha$-méthylstyrène), la répartition des différentes espèces du produit est réalisée à partir de l'intégration du signal RI des chromatogrammes SEC en modulant la réponse RI par la valeur de l'incrément spécifique de l'indice de réfraction dn/dc de chaque espèce ou en réalisant une droite d'étalonnage par ajout dosé de polymère thermoplastique comprenant des unités poly($\alpha$-méthylstyrène), de manière connue de l'homme de l'art.

**C** - **Composition des matrices élastomères**

**C-1 Les taux de polymère thermoplastique comprenant des unités $\alpha$-méthylstyrène et de polymères bloc sont déterminés par SEC RI comme décrit plus haut.**

Dans le cas de l'ajout de polymère thermoplastique comprenant des unités $\alpha$-méthylstyrène à un élastomère thermoplastique, on peut calculer la quantité de polymère thermoplastique comprenant des unités $\alpha$-méthylstyrène présent dans la matrice élastomère en additionnant la quantité contenue dans le mélange issu de la synthèse de l'élastomère thermoplastique et déterminée par SEC RI, et la quantité ajoutée en polymère thermoplastique selon des calculs connus de l'homme de l'art.

**C-2 Le taux de chaînes thermoplastiques comprenant des unités $\alpha$-méthylstyrène est déterminé par RMN comme décrit plus haut**

**C-3 Le taux de bloc thermoplastique comprenant des unités $\alpha$-méthylstyrène**

Le taux de bloc thermoplastique comprenant des unités $\alpha$-méthylstyrène est calculé de la manière suivante :

Taux de bloc thermoplastique comprenant des unités $\alpha$-méthylstyrène = (taux de chaînes thermoplastiques comprenant des unités $\alpha$-méthylstyrène - taux de polymère thermoplastique comprenant des unités $\alpha$-méthylstyrène)*100/ (100-taux de polymère thermoplastique comprenant des unités $\alpha$-méthylstyrène)

**D** - **Mesure de la Tg des blocs thermoplastiques comprenant des unités $\alpha$-méthylstyrène et des polymères thermoplastiques comprenant des unités $\alpha$-méthylstyrène**

### D-1 Des blocs des élastomères thermoplastiques

La caractérisation des Tg des élastomères thermoplastiques (du bloc élastomère et des blocs thermoplastiques comprenant des unités $\alpha$-méthylstyrène) est réalisée par une mesure DSC (appareil « DSC214 Polyma NETZSCH »). L'appareil est en fonctionnement sous atmosphère Hélium. Un prélèvement de 10 à 20 mg d'élastomère thermoplastique est déposé dans un creusé utilisé classiquement par l'homme de l'art pour réaliser des mesures de Tg.

L'échantillon est d'abord placé en isotherme à +25°C pendant 2 minutes puis refroidi à - 100°C à une vitesse de 50°C par minute. Un isotherme est alors appliqué à - 100°C pendant 5 minutes. Une première chauffe commence alors de - 100°C à + 10°C à la vitesse de 20°C par minute et se poursuit de 10°C à 250°C à la vitesse de 50°C par minute. L'échantillon subit alors une trempe pour atteindre - 100°C à la vitesse maximum autorisée par l'appareil. L'échantillon est alors maintenu en isotherme à - 100°C pendant 5 minutes. La deuxième chauffe commence alors de - 100°C à + 10°C à la vitesse de 20°C par minute (plage de mesure de la Tg du bloc élastomère) et se poursuit de + 10°C à +250°C à la vitesse de 50°C par minute (plage de mesure de la Tg des blocs thermoplastique comprenant des unités $\alpha$-méthylstyrène). Dans cette mesure seule la deuxième chauffe est exploitée.

### D-2 Polymères thermoplastiques comprenant des unités $\alpha$-méthylstyrène

La caractérisation des Tg des polymères thermoplastiques comprenant des unités $\alpha$-méthylstyrène est réalisée par une mesure DSC (appareil « DSC214 Polyma NETZSCH »). L'appareil est en fonctionnement sous atmosphère Hélium. Un prélèvement de 10 à 20 mg d'élastomère TPE est déposé dans un creusé utilisé classiquement par l'homme de l'art pour réaliser des mesures de Tg.

L'échantillon est d'abord placé en isotherme à +10°C pendant 2 minutes. Une première chauffe commence alors de 10°C à + 250°C à la vitesse de 50°C par minute. L'échantillon subit alors un refroidissement de 250° à 10°C à la vitesse de 30°C par minute. L'échantillon est alors maintenu en isotherme à 10°C pendant 2 minutes. La deuxième chauffe commence alors de 10°C à 250°C à la vitesse de 50°C par minute. Dans cette mesure seule la deuxième chauffe est exploitée.

### E - Propriétés hystérétiques

Tan $\delta$ max est mesurée sur un viscoanalyseur (« Metravib VA4000 »), selon la norme ASTM D 5992-96. On enregistre la réponse d'un échantillon de la matrice élastomère préalablement moulée de manière connue de l'homme du métier (éprouvette cylindrique de 2 mm d'épaisseur et de 79 mm$^2$ de section), soumis à une sollicitation sinusoïdale en cisaillement simple alterné, à la fréquence de 10Hz, à 60°C selon la norme ASTM D 1349-99. On effectue un balayage en amplitude de déformation de 0,1% à 50% crête-crête (cycle aller), puis de 50% à 0,1% crête-crête (cycle retour). Le résultat plus particulièrement exploité est le facteur de perte tan $\delta$. Pour le cycle retour, on indique la valeur maximale de tan $\delta$ observée, noté tan $\delta$ max. Cette valeur est représentative de l'hystérèse du matériau : plus la valeur de tan $\delta$ max est faible, moins la matrice est hystérétique.

## II. Synthèse des polymères et préparation des matrices élastomères

Dans les essais qui suivent on adoptera les dénominations suivantes:

poly($\alpha$-méthylstyrène) = PAMS
poly($\alpha$-méthylstyrène) lié = PAMS lié = blocs thermoplastiques comprenant des unités $\alpha$-méthylstyrène des polymères bloc
poly($\alpha$-méthylstyrène) total = PAMS total = chaînes thermoplastiques comprenant des unités $\alpha$-méthylstyrène
poly($\alpha$-méthylstyrène) libre = PAMS libre = polymère thermoplastique comprenant des unités $\alpha$-méthylstyrène

**A - Synthèse d'un polymère A tribloc poly($\alpha$-méthylstyrène)-b-polybutadiène-b-poly($\alpha$-méthylstyrène) à 15% massique de poly($\alpha$-méthylstyrène) total:**

Dans un réacteur de 80 L, on introduit 3,46 kg de méthylcyclohexane, 2 kg d'$\alpha$-méthylstyrène et 0,25 mol de tétrahydrofurfuryléthyléther. Après neutralisation des impuretés avec du n-butyl lithium, 0,05 mol de s-butyl lithium sont introduits. Après 2 h 55 à T = 5 °C, la conversion en $\alpha$-méthylstyrène mesurée par extrait sec est de 50 %. L'analyse du polymère par chromatographie d'exclusion stérique montre la présence d'une seule population : $M_n$ = 18 100 g/mol. La Tg mesurée par DSC est de 139 °C.

A l'issue de ces 2 h 55 à 5 °C, 33,1 kg de méthylcyclohexane dont les impuretés ont été préalablement neutralisées avec du n-butyl lithium sont introduits dans le réacteur puis 5,7 kg de butadiène sont introduits au moyen d'une pompe à un débit de 13 kg/h. Le milieu réactionnel est maintenu à 5 °C. A l'issue des 26 minutes nécessitant l'introduction des 5,7 kg de butadiène, le milieu est maintenu à 5 °C pendant 80 minutes complémentaires. La conversion en butadiène à l'issue de ces 106 minutes à 5°C est de 96 %. L'analyse du polymère par chromatographie d'exclusion stérique montre la présence de deux populations : $M_{n,1}$ = 13 800 g/mol (2%) correspondant à du PAMS libre et $M_{n,2}$ = 114 100 g/mol (98%) correspondant à du dibloc PAMS-b-polybutadiène.

0,024 mol de diméthyldichlorosilane sont ensuite introduits dans le réacteur. Le milieu réactionnel est maintenu à 5 °C pendant 12 minutes. Le polymère obtenu à l'issue de cette étape de couplage est un polymère tribloc poly($\alpha$-méthylstyrène)-b-polybutadiène-b-poly($\alpha$-méthylstyrène) qui présente trois populations par analyse SEC :

- $M_{n,1}$ = 12 000 g/mol (2%) correspondant à du PAMS libre,
- $M_{n,2}$ = 101 000 (14%) correspondant à du dibloc PAMS-b-polybutadiène et
- $M_{n,3}$ = 229 000 (83%) correspondant au tribloc PAMS-b-polybutadiène-b-PAMS.

Le taux massique en chaînes poly($\alpha$-méthylstyrène) total dans l'échantillon final mesuré par RMN est de 15%.

Le taux massique en bloc poly($\alpha$-méthylstyrène) lié par rapport au poids total de dibloc et de tribloc dans l'échantillon final est de 13%.

Le polymère sec est récupéré par stripping puis séchage à l'étuve.

**B - Synthèse d'un polymère B tribloc poly($\alpha$-méthylstyrène)-b-polybutadiène-b-poly($\alpha$-méthylstyrène) à 28% massique de poly($\alpha$-méthylstyrène) total :**

Dans un réacteur de 80 L, on introduit 5 kg de méthylcyclohexane, 3 kg d'$\alpha$-méthylstyrène et 0,375 mol de tétrahydrofurfuryléthyléther. Après neutralisation des impuretés avec du n-butyl lithium, 0,075 mol de s-butyl lithium sont introduits. Après 2 h 20 à T = 5 °C, la conversion en $\alpha$-méthylstyrène mesurée par extrait sec est de 51 %. L'analyse du polymère par chromatographie d'exclusion stérique montre la présence d'une seule population : $M_n$ = 18 500 g/mol. La Tg mesurée par DSC est de 155 °C.

A l'issue de ces 2 h 20 à 5 °C, 33,6 kg de méthylcyclohexane dont les impuretés ont été préalablement neutralisées avec du n-butyl lithium sont introduits dans le réacteur puis 6 kg de butadiène sont introduits au moyen d'une pompe à un débit de 13 kg/h. Le milieu réactionnel est maintenu à 5 °C. A l'issue des 28 minutes nécessitant l'introduction des 6 kg de butadiène, le milieu est maintenu à 5 °C pendant 5 minutes complémentaires. La conversion en butadiène à l'issue de ces 33 minutes à 5°C est de 79 %. L'analyse du polymère par chromatographie d'exclusion stérique montre la présence de deux populations : $M_{n,1}$ = 10 800 g/mol (2%) correspondant à du PAMS libre et $M_{n,2}$ = 53 800 g/mol (98%) correspondant à du dibloc PAMS-b-polybutadiène.

0,036 mol de diméthyldichlorosilane sont ensuite introduits dans le réacteur. Le milieu réactionnel est maintenu à 5 °C pendant 12 minutes. Le polymère obtenu à l'issue de cette étape de couplage est un polymère tribloc poly($\alpha$-méthylstyrène)-b-polybutadiène-b-poly($\alpha$-méthylstyrène) qui présente trois populations par analyse SEC :

- $M_{n,1}$ = 11 000 g/mol (2%) correspondant à du PAMS libre ,
- $M_{n,2}$ = 55 000 (5%) correspondant à du dibloc PAMS-b-polybutadiène et
- $M_{n,3}$ = 113 000 (93%) correspondant à du tribloc PAMS-b-polybutadiène-b-PAMS.

Le taux massique en chaînes poly($\alpha$-méthylstyrène) total dans l'échantillon final mesuré par RMN est de 28%.

Le taux massique en bloc poly($\alpha$-méthylstyrène) lié par rapport au poids total de dibloc et de tribloc dans l'échantillon final est de 27%.

Le polymère sec est récupéré par stripping puis séchage à l'étuve.

**C - Synthèse d'un polymère C tribloc poly($\alpha$-méthylstyrène)-b-polybutadiène-b-poly($\alpha$-méthylstyrène) à 38% massique de poly($\alpha$-méthylstyrène) total :**

Dans un réacteur de 80 L, on introduit 8,47 kg de méthylcyclohexane, 5 kg d'$\alpha$-méthylstyrène et 0,625 mol de tétrahydrofurfuryléthyléther. Après neutralisation des impuretés avec du n-butyl lithium, 0,125 mol de s-butyl lithium sont introduits. Après 2 h 24 à T = 5 °C, la conversion en $\alpha$-méthylstyrène mesurée par extrait sec est de 49 %. L'analyse du polymère par chromatographie d'exclusion stérique montre la présence d'une seule population : $M_n$ = 18 000 g/mol. La Tg mesurée par DSC est de 143 °C.

A l'issue de ces 2 h 24 à 5 °C, 20 kg de méthylcyclohexane dont les impuretés ont été préalablement neutralisées avec du n-butyl lithium sont introduits dans le réacteur puis 4,3 kg de butadiène sont introduits au moyen d'une pompe à un débit de 13 kg/h. Le milieu réactionnel est maintenu à 5 °C. A l'issue des 21 minutes nécessitant l'introduction des 4,3 kg de butadiène, le milieu est maintenu à 5 °C pendant 5 minutes complémentaires. La conversion en butadiène à l'issue de ces 26 minutes à 5°C est de 85 %. L'analyse du polymère par chromatographie d'exclusion stérique montre la présence de deux populations : $M_{n,1}$ = 10 400 g/mol (2%) correspondant à du PAMS libre et $M_{n,2}$ = 37 700 g/mol (98%) correspondant à du dibloc PAMS-b-polybutadiène.

0,06 mol de diméthyldichlorosilane sont ensuite introduits dans le réacteur. Le milieu réactionnel est maintenu à 5 °C pendant 12 minutes. Le polymère obtenu à l'issue de cette étape de couplage est un polymère tribloc poly($\alpha$-méthylstyrène)-b-polybutadiène-b-poly($\alpha$-méthylstyrène) qui présente trois populations par analyse SEC :

- $M_{n,1}$ = 10 000 g/mol (2%) correspondant à du PAMS libre,
- $M_{n,2}$ = 38 000 (4%) correspondant à du dibloc PAMS-b-polybutadiène et
- $M_{n,3}$ = 77 000 (94%) correspondant à du tribloc PAMS-b-polybutadiène-b-PAMS.

Le taux massique en chaînes poly($\alpha$-méthylstyrène) total dans l'échantillon final mesuré par RMN est de 38%.

Le taux massique en bloc poly($\alpha$-méthylstyrène) lié par rapport au poids total de dibloc et de tribloc dans l'échantillon final est de 37%.

Le polymère sec est récupéré par stripping puis séchage à l'étuve.

**D - Synthèse du polymère D poly($\alpha$-méthylstyrène):**

Dans un réacteur de 80 L, on introduit 13,3 kg de méthylcyclohexane, 30 kg d'$\alpha$-méthylstyrène et 1,73 mol de tétrahydrofurane. Après neutralisation des impuretés avec du n-butyl lithium, 0,75 mol de s-butyl lithium sont introduits. Après 66 minutes à T = 20 °C. le taux de conversion en $\alpha$-méthylstyrène mesurée par extrait sec est de 53 %. Ce taux est déterminé par pesée d'un extrait séché à 140 °C, sous la pression réduite de 200 mmHg. La polymérisation est arrêtée par ajout de méthanol dans le milieu réactionnel (2 éq/Li) et le polymère sec est récupéré par stripping puis séchage à l'étuve. L'analyse du polymère par chromatographie d'exclusion stérique montre la présence d'une seule population : $M_n$ = 19 100 g/mol. La Tg mesurée par DSC est de 160°C.

**E - Préparation des matrices élastomères de polymères tribloc poly($\alpha$-méthylstyrène)-b-polybutadiène-b-poly($\alpha$-méthylstyrène) et poly($\alpha$-méthylstyrène) :**

Pour la réalisation des mélanges de polymères tribloc poly($\alpha$-méthylstyrène)-b-polybutadiène-b-poly($\alpha$-méthylstyrène) + poly($\alpha$-méthylstyrène) + dibloc poly($\alpha$-méthylstyrène)-b-polybutadiène à proportions maîtrisées, les teneurs massiques en polymère en g/L des solutions contenant les polymères A à D ont été mesurées par extrait sec. Les volumes à mélanger des solutions A à D récupérées à l'issue des polymérisations ont été ajustés de façon à obtenir les proportions en polymère visées (cf tableau 1 ci-dessous pour les ratios visés). Les solutions dans du méthylcyclohexane ont été mélangées une heure à température ambiante puis le mélange de polymères sec a été récupéré par stripping puis séchage par dévolatilisation dans une étuve.

Tableau 1

| Matrice | 1 | 2 | 3 | 4 | 5 | 6 |
|---|---|---|---|---|---|---|
| Polymère A | 100% | | | 87% | | 74% |
| Polymère B | | 100% | | | 86% | |
| Polymère C | | | 100% | | | |
| Polymère D | | | | 13% | 14% | 26% |

Les matrices élastomères obtenues ainsi par mélangeage sont mises en forme par moulage pour la mesure de leurs propriétés physiques, mécaniques ou dynamiques.

Les résultats sont reportés dans le tableau 2 ci-dessous. Les taux sont exprimés en pourcentage en poids par rapport au poids total de la matrice élastomère.

Tableau 2

| Matrice élastomère | 1 Témoin | 2 Témoin | 3 Témoin | 4 Matrice 1 + PAMS libre | 5 Matrice 2 + PAMS libre | 6 Matrice 1 + PAMS libre |
|---|---|---|---|---|---|---|
| **Taux\* de PAMS total** | 15 | 28 | 38 | 26 | 38 | 37 |
| **Taux\* de tribloc** | 84 | 92 | 94 | 72 | 79 | 62 |
| **Taux\* de dibloc\*** | 14 | 6 | 4 | 13 | 5 | 11 |
| **Taux\* de PAMS libre** | 2 | 2 | 2 | 15 | 16 | 27 |
| **Hystérèse Tan$\delta$ max 60°C** | 0.055 | 0.159 | 0.360 | 0.062 | 0.278 | 0.069 |
| \* les taux sont exprimés en % poids par rapport au poids total de la matrice élastomère | | | | | | |

Il ressort des résultats reportés dans le tableau que :

- La présence dans la matrice élastomère 4 d'un taux de 15% en poids d'un polymère poly($\alpha$-méthylstyrène) selon l'invention, permet de diminuer l'hystérèse du matériau, à iso taux de poly($\alpha$-méthylstyrène) total par rapport à la matrice témoin 2 qui comprend 2% en poids d'un polymère poly($\alpha$-méthylstyrène);
- La présence dans les matrices élastomères 5 et 6 d'un taux respectivement de 16% et 27% en poids d'un polymère poly($\alpha$-méthylstyrène) selon l'invention, permet de diminuer l'hystérèse du matériau, à iso taux de poly($\alpha$-méthyls-tyrène) total par rapport à la matrice témoin 3 qui comprend 2% poids en d'un polymère poly($\alpha$-méthylstyrène)

Ainsi, on constate qu'en augmentant le taux de polymère thermoplastique comprenant des unités $\alpha$-méthylsty-rène dans une matrice élastomère, sans augmenter le taux total de chaînes thermoplastiques comprenant des unités $\alpha$-méthylstyrène, il est possible de diminuer les valeurs de Tan $\delta$ à 60°C et donc de baisser l'hystérèse de la matrice élastomère comprenant un mélange d'un élastomère thermoplastique tribloc comprenant un bloc central élastomère diénique et des blocs terminaux thermoplastiques comprenant des unités $\alpha$-méthylstyrène, et de 2% à 20% d'un élastomère thermoplastique dibloc comprenant un bloc thermoplastique comprenant des unités $\alpha$-méthylstyrène.

## Revendications

1. Une matrice élastomère comprenant

   - un élastomère thermoplastique tribloc ayant un bloc élastomère diénique central et deux blocs thermoplastiques terminaux comprenant des unités $\alpha$-méthylstyrène liés au bloc élastomère diénique,
   - de 2% à 20% en poids par rapport au poids total de la matrice élastomère, d'un élastomère thermoplastique dibloc ayant un bloc élastomère diénique et un bloc thermoplastique comprenant des unités $\alpha$-méthylstyrène,
   - plus de 10% en poids par rapport au poids total de la matrice élastomère d'un polymère thermoplastique comprenant des unités $\alpha$-méthylstyrène,
   le taux des blocs thermoplastiques des élastomères thermoplastiques tribloc et dibloc étant d'au moins 10% en poids par rapport au poids total des élastomères thermoplastiques tribloc et dibloc,
   le taux de chaînes thermoplastiques comprenant des unités $\alpha$-méthylstyrène étant d'au plus 55% en poids par rapport au poids total de la matrice élastomère,
   les chaînes thermoplastiques comprenant des unités $\alpha$-méthylstyrène étant constituées des chaînes du polymère thermoplastique comprenant des unités $\alpha$-méthylstyrène et des blocs thermoplastiques des élastomères thermoplastiques tribloc et dibloc.

2. Matrice élastomère selon la revendication précédente **caractérisée en ce qu'**elle comprend au plus 45% en poids, par rapport au poids total de la matrice élastomère, de polymère thermoplastique comprenant des unités $\alpha$-méthylstyrène.

3. Matrice élastomère selon l'une quelconque des revendications précédentes **caractérisée en ce qu'**elle comprend au moins 20% en poids par rapport au poids total de la matrice élastomère de chaînes thermoplastiques comprenant des unités $\alpha$-méthylstyrène, de préférence au moins 25% en poids.

**4.** Matrice élastomère selon l'une quelconque des revendications précédentes **caractérisée en ce qu'**elle comprend au moins 15% en poids par rapport au poids total de la matrice élastomère du polymère thermoplastique comprenant des unités $\alpha$-méthylstyrène.

**5.** Matrice élastomère selon l'une quelconque des revendications précédentes **caractérisée en ce qu'**elle comprend majoritairement l'élastomère thermoplastique tribloc.

**6.** Matrice élastomère selon l'une quelconque des revendications précédentes **caractérisée en ce qu'**elle comprend au plus 80% en poids de l'élastomère thermoplastique tribloc.

**7.** Matrice élastomère selon l'une quelconque des revendications précédentes **caractérisée en ce que** le taux des blocs thermoplastiques comprenant des unités $\alpha$-méthylstyrène est d'au moins 15% en poids par rapport au poids total des élastomères thermoplastiques tribloc et dibloc.

**8.** Matrice élastomère selon l'une quelconque des revendications précédentes **caractérisée en ce que** le taux des blocs thermoplastiques comprenant des unités $\alpha$-méthylstyrène est d'au plus 45% en poids, de préférence d'au plus 40% en poids par rapport au poids total des élastomères thermoplastiques tribloc et dibloc.

**9.** Matrice élastomère selon l'une quelconque des revendications précédentes **caractérisée en ce que** le bloc élastomère diénique de l'élastomère thermoplastique tribloc et de l'élastomère thermoplastique dibloc comprend des unités issues de butadiène.

**10.** Matrice élastomère selon l'une quelconque des revendications précédentes **caractérisée en ce que** le bloc élastomère diénique de l'élastomère thermoplastique tribloc et de l'élastomère thermoplastique dibloc comprend en outre des unités issues d'un monomère vinylaromatique, de préférence le styrène.

**11.** Matrice élastomère selon l'une quelconque des revendications précédentes **caractérisée en ce que** les blocs thermoplastiques des élastomères thermoplastiques tribloc et dibloc comprenant des unités $\alpha$-méthylstyrène comprennent majoritairement des unités issues d'$\alpha$-méthylstyrène.

**12.** Matrice élastomère selon l'une quelconque des revendications précédentes **caractérisée en ce que** les blocs thermoplastiques des élastomères thermoplastiques tribloc et dibloc comprenant des unités $\alpha$-méthylstyrène sont essentiellement constitués d'unités issues d'$\alpha$-méthylstyrène.

**13.** Matrice élastomère selon l'une quelconque des revendications précédentes **caractérisée en ce que** le polymère thermoplastique comprenant des unités issues d'$\alpha$-méthylstyrène comprend majoritairement des unités issues d'$\alpha$-méthylstyrène.

**14.** Matrice élastomère selon l'une quelconque des revendications précédentes **caractérisée en ce que** le polymère thermoplastique comprenant des unités issues d'$\alpha$-méthylstyrène est un homopolymère d'$\alpha$-méthylstyrène.

**15.** Matrice élastomère selon l'une quelconque des revendications précédentes **caractérisée en ce que**

- les blocs diéniques des élastomères thermoplastiques tribloc et dibloc comprend des unités issues du butadiène,
- les blocs thermoplastiques des élastomères thermoplastiques tribloc et dibloc sont constitués de poly($\alpha$-méthylstyrène),
- le polymère thermoplastique comprenant des unités $\alpha$-méthylstyrène est un poly($\alpha$-méthylstyrène),
- le taux de blocs thermoplastiques des élastomères thermoplastiques tribloc et dibloc comprenant des unités $\alpha$-méthylstyrène est d'au moins 10% en poids et d'au plus 45% en poids par rapport au poids total de l'élastomère thermoplastique tribloc et de l'élastomère thermoplastique dibloc,
- la matrice comprend plus de 10%, de préférence au moins 15%, en poids et au plus 45% en poids par rapport au poids total de la matrice élastomère d'un polymère thermoplastique comprenant des unités $\alpha$-méthylstyrène,
- le taux de chaînes thermoplastiques comprenant des unités $\alpha$-méthylstyrène est d'au moins 20% en poids et d'au plus 55% en poids par rapport au poids total de la matrice élastomère.

**Patentansprüche**

1. Elastomermatrix, umfassend

   - ein thermoplastisches Dreiblock-Elastomer mit einem zentralen Dien-Elastomer-Block und zwei endseitigen thermoplastischen Blöcken, die α-Methylstyrol-Einheiten umfassen, die an den Dien-Elastomer-Block gebunden sind,
   - 2 Gew.-% bis 20 Gew.-%, bezogen auf das Gesamtgewicht der Elastomermatrix, eines thermoplastischen Zweiblock-Elastomers mit einem Dien-Elastomer-Block und einem thermoplastischen Block, der α-Methylstyrol-Einheiten umfasst,
   - mehr als 10 Gew.-%, bezogen auf das Gesamtgewicht der Elastomermatrix, eines thermoplastischen Polymers, das α-Methylstyrol-Einheiten umfasst,
   wobei der Anteil der thermoplastischen Blöcke der thermoplastischen Dreiblock- und Zweiblock-Elastomere mindestens 10 Gew.-% bezogen auf das Gesamtgewicht der thermoplastischen Dreiblock- und Zweiblock-Elastomere beträgt,
   wobei der Anteil von thermoplastischen Ketten, die α-Methylstyrol-Einheiten umfassen, höchstens 55 Gew.-% bezogen auf das Gesamtgewicht der Elastomermatrix beträgt,
   wobei die thermoplastischen Ketten, die α-Methylstyrol-Einheiten umfassen, aus den Ketten des thermoplastischen Polymers, das α-Methylstyrol-Einheiten umfasst, und den thermoplastischen Blöcken der thermoplastischen Dreiblock- und Zweiblock-Elastomere bestehen.

2. Elastomermatrix nach dem vorhergehenden Anspruch, **dadurch gekennzeichnet, dass** sie höchstens 45 Gew.-%, bezogen auf das Gesamtgewicht der Elastomermatrix, eines thermoplastischen Polymers umfasst, das α-Methylstyrol-Einheiten umfasst.

3. Elastomermatrix nach einem der vorhergehenden Ansprüche, **dadurch gekennzeichnet, dass** sie mindestens 20 Gew.-%, bezogen auf das Gesamtgewicht der Elastomermatrix, von thermoplastischen Ketten umfasst, die α-Methylstyrol-Einheiten umfassen, vorzugsweise mindestens 25 Gew.-%.

4. Elastomermatrix nach einem der vorhergehenden Ansprüche, **dadurch gekennzeichnet, dass** sie mindestens 15 Gew.-%, bezogen auf das Gesamtgewicht der Elastomermatrix, des thermoplastischen Polymers umfasst, das α-Methylstyrol-Einheiten umfasst.

5. Elastomermatrix nach einem der vorhergehenden Ansprüche, **dadurch gekennzeichnet, dass** sie mehrheitlich das thermoplastische Dreiblock-Elastomer umfasst.

6. Elastomermatrix nach einem der vorhergehenden Ansprüche, **dadurch gekennzeichnet, dass** sie höchstens 80 Gew.-% des thermoplastischen Dreiblock-Elastomers umfasst.

7. Elastomermatrix nach einem der vorhergehenden Ansprüche, **dadurch gekennzeichnet, dass** der Anteil der thermoplastischen Blöcke, die α-Methylstyrol-Einheiten umfassen, mindestens 15 Gew.-% bezogen auf das Gesamtgewicht der thermoplastischen Dreiblock- und Zweiblock-Elastomere beträgt.

8. Elastomermatrix nach einem der vorhergehenden Ansprüche, **dadurch gekennzeichnet, dass** der Anteil der thermoplastischen Blöcke, die α-Methylstyrol-Einheiten umfassen, höchstens 45 Gew.-%, vorzugsweise höchstens 40 Gew.-%, bezogen auf das Gesamtgewicht der thermoplastischen Dreiblock- und Zweiblock-Elastomere beträgt.

9. Elastomermatrix nach einem der vorhergehenden Ansprüche, **dadurch gekennzeichnet, dass** der Dien-Elastomer-Block des thermoplastischen Dreiblock-Elastomers und des thermoplastischen Zweiblock-Elastomers aus Butadien hervorgegangene Einheiten umfasst.

10. Elastomermatrix nach einem der vorhergehenden Ansprüche, **dadurch gekennzeichnet, dass** der Dien-Elastomer-Block des thermoplastischen Dreiblock-Elastomers und des thermoplastischen Zweiblock-Elastomers ferner Einheiten umfasst, die aus einem vinylaromatischen Monomer, vorzugsweise Styrol, hervorgegangen sind.

11. Elastomermatrix nach einem der vorhergehenden Ansprüche, **dadurch gekennzeichnet, dass** die thermoplastischen Blöcke der thermoplastischen Dreiblock- und Zweiblock-Elastomere, die α-Methylstyrol-Einheiten umfassen, mehrheitlich aus α-Methylstyrol hervorgegangene Einheiten umfassen.

**12.** Elastomermatrix nach einem der vorhergehenden Ansprüche, **dadurch gekennzeichnet, dass** die thermoplastischen Blöcke der thermoplastischen Dreiblock- und Zweiblock-Elastomere, die $\alpha$-Methylstyrol-Einheiten umfassen, im Wesentlichen aus Einheiten bestehen, die aus $\alpha$-Methylstyrol hervorgegangen sind.

**13.** Elastomermatrix nach einem der vorhergehenden Ansprüche, **dadurch gekennzeichnet, dass** das thermoplastische Polymer, das aus $\alpha$-Methylstyrol hervorgegangene Einheiten umfasst, mehrheitlich aus $\alpha$-Methylstyrol hervorgegangene Einheiten umfasst.

**14.** Elastomermatrix nach einem der vorhergehenden Ansprüche, **dadurch gekennzeichnet, dass** das thermoplastische Polymer, das aus $\alpha$-Methylstyrol hervorgegangene Einheiten umfasst, ein $\alpha$-Methylstyrol-Homopolymer ist.

**15.** Elastomermatrix nach einem der vorhergehenden Ansprüche, **dadurch gekennzeichnet, dass**

- die Dien-Blöcke der thermoplastischen Dreiblock- und Zweiblock-Elastomere aus Butadien hervorgegangene Einheiten umfassen,
- die thermoplastischen Blöcke der thermoplastischen Dreiblock- und Zweiblock-Elastomere aus Poly($\alpha$-methylstyrol) bestehen,
- das thermoplastische Polymer, das $\alpha$-Methylstyrol-Einheiten umfasst, ein Poly($\alpha$-methylstyrol) ist,
- der Anteil von thermoplastischen Blöcken der thermoplastischen Dreiblock- und Zweiblock-Elastomere, die $\alpha$-Methylstyrol-Einheiten umfassen, mindestens 10 Gew.-% und höchstens 45 Gew.-% bezogen auf das Gesamtgewicht des thermoplastischen Dreiblock-Elastomers und des thermoplastischen Zweiblock-Elastomers beträgt,
- die Matrix mehr als 10 Gew.-%, vorzugsweise mindestens 15 Gew.-%, und höchstens 45 Gew.-%, bezogen auf das Gesamtgewicht der Elastomermatrix, eines thermoplastischen Polymers umfasst, das $\alpha$-Methylstyrol-Einheiten umfasst,
- der Anteil von thermoplastischen Ketten, die $\alpha$-Methylstyrol-Einheiten umfassen, mindestens 20 Gew.-% und höchstens 55 Gew.-% bezogen auf das Gesamtgewicht der Elastomermatrix beträgt.

**Claims**

**1.** Elastomer matrix comprising:

- a triblock thermoplastic elastomer having a central diene elastomer block and two terminal thermoplastic blocks comprising $\alpha$-methylstyrene units bonded to the diene elastomer block,
- from 2% to 20% by weight, with respect to the total weight of the elastomer matrix, of a diblock thermoplastic elastomer having a diene elastomer block and a thermoplastic block comprising $\alpha$-methylstyrene units,
- more than 10% by weight, with respect to the total weight of the elastomer matrix, of a thermoplastic polymer comprising $\alpha$-methylstyrene units,
the content of the thermoplastic blocks of the triblock and diblock thermoplastic elastomers being at least 10% by weight, with respect to the total weight of the triblock and diblock thermoplastic elastomers,
the content of thermoplastic chains comprising $\alpha$-methylstyrene units being at most 55% by weight, with respect to the total weight of the elastomer matrix,
the thermoplastic chains comprising $\alpha$-methylstyrene units being constituted of the chains of the thermoplastic polymer comprising $\alpha$-methylstyrene units and of the thermoplastic blocks of the triblock and diblock thermoplastic elastomers.

**2.** Elastomer matrix according to the preceding claim, **characterized in that** it comprises at most 45% by weight, with respect to the total weight of the elastomer matrix, of thermoplastic polymer comprising $\alpha$-methylstyrene units.

**3.** Elastomer matrix according to either one of the preceding claims, **characterized in that** it comprises at least 20% by weight, with respect to the total weight of the elastomer matrix, of thermoplastic chains comprising $\alpha$-methylstyrene units, preferably at least 25% by weight.

**4.** Elastomer matrix according to any one of the preceding claims, **characterized in that** it comprises at least 15% by weight, with respect to the total weight of the elastomer matrix, of the thermoplastic polymer comprising $\alpha$-methylstyrene units.

5. Elastomer matrix according to any one of the preceding claims, **characterized in that** it comprises predominantly the triblock thermoplastic elastomer.

6. Elastomer matrix according to any one of the preceding claims, **characterized in that** it comprises at most 80% by weight of the triblock thermoplastic polymer.

7. Elastomer matrix according to any one of the preceding claims, **characterized in that** the content of the thermoplastic blocks comprising $\alpha$-methylstyrene units is at least 15% by weight, with respect to the total weight of the triblock and diblock thermoplastic elastomers.

8. Elastomer matrix according to any one of the preceding claims, **characterized in that** the content of the thermoplastic blocks comprising $\alpha$-methylstyrene units is at most 45% by weight, preferably at most 40% by weight, with respect to the total weight of the triblock and diblock thermoplastic elastomers.

9. Elastomer matrix according to any one of the preceding claims, **characterized in that** the diene elastomer block of the triblock thermoplastic elastomer and of the diblock thermoplastic elastomer comprises units resulting from butadiene.

10. Elastomer matrix according to any one of the preceding claims, **characterized in that** the diene elastomer block of the triblock thermoplastic elastomer and of the diblock thermoplastic elastomer additionally comprises units resulting from a vinylaromatic monomer, preferably styrene.

11. Elastomer matrix according to any one of the preceding claims, **characterized in that** the thermoplastic blocks of the triblock and diblock thermoplastic elastomers comprising $\alpha$-methylstyrene units predominately comprise units resulting from $\alpha$-methylstyrene.

12. Elastomer matrix according to any one of the preceding claims, **characterized in that** the thermoplastic blocks of the triblock and diblock thermoplastic elastomers comprising $\alpha$-methylstyrene units are essentially constituted of units resulting from $\alpha$-methylstyrene.

13. Elastomer matrix according to any one of the preceding claims, **characterized in that** the thermoplastic polymer comprising units resulting from $\alpha$-methylstyrene comprises predominately units resulting from $\alpha$-methylstyrene.

14. Elastomer matrix according to any one of the preceding claims, **characterized in that** the thermoplastic polymer comprising units resulting from $\alpha$-methylstyrene is an $\alpha$-methylstyrene homopolymer.

15. Elastomer matrix according to any one of the preceding claims, **characterized in that**:

- the diene blocks of the triblock and diblock thermoplastic elastomers comprise units resulting from butadiene,
- the thermoplastic blocks of the triblock and diblock thermoplastic elastomers are constituted of poly($\alpha$-methylstyrene),
- the thermoplastic polymer comprising $\alpha$-methylstyrene units is a poly($\alpha$-methylstyrene),
- the content of thermoplastic blocks of the triblock and diblock thermoplastic elastomers comprising $\alpha$-methylstyrene units is at least 10% by weight and at most 45% by weight, with respect to the total weight of the triblock thermoplastic elastomer and of the diblock thermoplastic elastomer,
- the matrix comprises more than 10% by weight, preferably at least 15% by weight, and at most 45% by weight, with respect to the total weight of the elastomer matrix, of a thermoplastic polymer comprising $\alpha$-methylstyrene units,
- the content of thermoplastic chains comprising $\alpha$-methylstyrene units is at least 20% by weight and at most 55% by weight, with respect to the total weight of the elastomer matrix.

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007112232 A2
- FR 2243214
- EP 1498455 A1
- EP 2955203 A1
- WO 2020136194 A
- WO 8505116 A1
- EP 0014947 A1
- FR 3045615
- US 4302559 A
- WO 2020070406 A1
- FR 2852960 A1